# EUROPEAN PATENT APPLICATION

(11) **EP 3 238 797 A1**
(43) Date of publication of application: **01.11.2017**
(21) Application number: 15871968.2
(22) Date of filing: 24.12.2015
(51) Int. Cl.: B01D 1/00, B01D 1/30

(54) **MECHANICAL VAPOR RECOMPRESSION SYSTEM AND METHOD THEREOF**

(30) Priority: 24.12.2014 CN 201420854210 U; 24.12.2014 CN 201410838000
(71) Applicant: Gardner Denver Machinery (Shanghai) Co. Ltd., Shanghai 201707 (CN)
(72) Inventor: YANG, Zhiming, Kunshan Jiangsu 215332 (CN); LIU, Mingtong, Shanghai 201100 (CN)
(74) Representative: Taylor, Adam David
(86) International application number: PCT/CN2015/098649
(87) International publication number: WO 2016/101900

(57) **Abstract**

A mechanical vapor recompression system and method thereof. The system comprises: an evaporator (20), a first cavity (30), a first fluid collection area (31), a second cavity (32) and a blowing type pump (33), the evaporator (20) having a high temperature fluid reception channel (21 a) and a low temperature fluid reception channel (21 b); the method comprises: enabling a first fluid to flow from a vapor source (10) to the high temperature fluid reception channel (21a) of the evaporator (20), enabling liquid water collected from a first fluid supply to flow to the low temperature reception channel (21b), and transferring heat of vaporous water in the high temperature reception channel (21 a) to the liquid water collected in the low temperature reception channel (21 b); converting at least a part of the liquid water collected in the low temperature reception channel (21 b) to vaporous water, and returning the further heated vaporous water to the vapor source (10).

## Description

### Field of the Invention

The present invention relates to a mechanical vapor recompression system and a method thereof.

### Description of the Related Art

Mechanical vapor recompression (MVR) system is a novel efficient and energy-saving evaporation apparatus developed at the end of the 1990s. Its operating process is that a low temperature vapor is compressed by a compressor, and after the temperature, pressure and enthalpy are increased, it enters a heat exchanger for condensation, so as to make full use of the vapor's latent heat. Except for activation, there is no need to produce vapor during the entire evaporation process.

In a multiple-effect evaporation process, the secondary vapor of an effect of an evaporator cannot be directly used as a heat source for the same effect, and can be used as a heat source only for the next effect or several subsequent effects. If it is to be used as a heat source for the same effect, additional energy must be provided, such that its temperature (pressure) is increased. A vapor jet pump can only compress a part of the secondary vapor, while an MVR system can compress all secondary vapors in the evaporator.

In a falling-film evaporator, a solution is circulated via a material circulation pump in a heating pipe. A waste vapor is used as the initial vapor to supply heat outside of the pipe, which heats the solution to boil to produce a secondary vapor, and the produced secondary vapor is sucked by a Roots booster blower. After the pressure is boosted, the temperature of the secondary vapor is increased, and the secondary vapor is supplied as a clean vapor to users. After a normal start-up, the secondary vapor is used as a heat source to heat clean water, and in such a way, the circulation and evaporation proceed continuously.

An MVR evaporator uses low-temperature and low-pressure vapor technologies and clean energy as the "electric energy" to produce vapor and separate water from a medium. At present, MVR is the most advanced evaporation technology internationally and a product for upgrade from conventional evaporators. However, existing MVR systems do not process water produced from the vapor for circulated use.

### Summary of the Invention

The object of the present application is to provide a mechanical vapor recompression system and a method thereof that can overcome at least some shortcomings of the prior art.

One aspect of the present application provides a mechanical vapor recompression system. The mechanical vapor recompression system may comprise an evaporator, a first separation tank, and a second separation tank. In one embodiment, the first separation tank and the second separation tank may be cavities having a fluid collection area therein, respectively. The evaporator receives a mixture of waste vapor and water having a first temperature from a vapor source, and releases heat from the received mixture of waste vapor and water to lower the temperature so as to form a mixture of waste vapor and water having a second temperature. The second separation tank performs separation on the mixture of waste vapor and water having a second temperature to separate the waste vapor and water therein, the separated water is filtered and fed to the first separation tank, where it is replenished by water having a normal temperature and then sent to the evaporator, wherein the water replenished with water performs heat exchange in the evaporator with the high-temperature (the first temperature) waste vapor received by the evaporator in real time from the vapor source, and when heated to a predetermined temperature, it is sent back to the vapor source.

A mechanical vapor recovery system according to one embodiment of the present application may comprise an evaporator, a first cavity, a first fluid collection area, a second cavity and a blowing type pump;
the evaporator comprises a first inlet, a second inlet, a first outlet and a second outlet, the first inlet and the first outlet forming opposing ends of a high temperature fluid reception channel, the second inlet and the second outlet forming opposing ends of a low temperature fluid reception channel, and no opening communicating the high temperature fluid reception channel and the low temperature fluid reception channel existing between the two;
the first cavity comprises a gap space and has an inlet leading to the gap space, and the inlet is in fluid communication with the first outlet in the fluid reception direction of the first outlet of the evaporator;
the first fluid collection area is in fluid communication with the inlet in the fluid reception direction of the inlet of the first cavity, the fluid collection area comprises an outlet opened from the collection area, the outlet opened from the collection area is in fluid communication with the second inlet of the evaporator, and the second inlet of the evaporator is at a fluid reception position relative to the outlet of the first fluid collection area;
the second cavity comprises a gap space and an inlet leading to the gap space, the inlet of the second cavity is in fluid communication with the second outlet of the evaporator and is at a fluid reception position of the second outlet of the evaporator, and the second cavity comprises an outlet opened outwardly from the gap space thereof;
the blowing type pump comprises a fluid inlet in fluid communication with the outlet of the second cavity, the fluid inlet is at a fluid reception position relative to the outlet of the second cavity, and
wherein, in the operating state of the system:
a first fluid having a first temperature is in the high temperature fluid reception channel, and the first fluid is received to a vapor source and comprises a mixture of vaporous and liquid water;
a second fluid having a second temperature is in the low temperature fluid reception channel, and the second fluid comprises a mixture of vaporous and liquid water;
heat of the first fluid in the high temperature fluid reception channel is transferred to the second fluid in the low temperature fluid reception channel; and
the first fluid in the high temperature fluid reception channel is from the current supply of the vapor source, the vapor source is in fluid communication with the first inlet of the evaporator, and the second fluid in the low temperature fluid reception channel at least partially comprises the fluid previously supplied by the vapor source; the second fluid in the low temperature fluid reception channel has been at least partially collected in the fluid collection area.

A method for MVR is provided in another aspect of the present application, which may comprise supplying a first fluid to flow from a vapor source to a high temperature fluid reception channel of an evaporator, the first fluid supply comprising a mixture of vaporous and liquid water; collecting liquid water from the first fluid supply; enabling the collected liquid water to flow to a low temperature fluid reception channel of the evaporator; enabling the vaporous water subsequently supplied by the vapor source to flow to the high temperature fluid reception channel of the evaporator; transferring heat of subsequently supplied vaporous water in the high temperature fluid reception channel of the evaporator to the liquid water collected in the low temperature fluid reception channel of the evaporator; increasing the temperature of the collected liquid water through the heat transfer; converting at least a part of the liquid water collected in the low temperature fluid reception channel to vaporous water; further heating the water converted to the vaporous state; and returning the further heated vaporous water to the vapor source.

The MVR system described above at least can process water produced from the vapor for circulated use.

In one embodiment, the first cavity and the first fluid collection area form at least a part of a separator and/or a condenser.

In one embodiment, the second cavity and the second fluid collection area form at least a part of an evaporator and/or a separator.

In one embodiment, compared with the area of the low temperature fluid reception channel immediately adjacent to the inlet of the evaporator, the area of the low temperature fluid reception channel immediately adjacent to the outlet of the evaporator has a volume expansion by one thousand times.

In one embodiment, the first cavity comprises an outlet opened outwardly from the gap space thereof, the outlet is in fluid communication with a blower, and the vaporous water separated from the first fluid in the first fluid collection area is extracted under the action of the blower via the outlet of the first cavity and discharged as waste vapor.

### Brief Description of the Accompanying Drawings

Fig. 1 illustrates an MVR system according to an embodiment of the present application;
Fig. 2 is a schematic diagram of the implementation of the MVR system according to an embodiment of the present application; and
Fig. 3 illustrates an MVR method according to an embodiment of the present application.

### Detailed Description of the Embodiments

Embodiments of the present application will be further described below with reference to the accompanying drawings. In the accompanying drawings, the same legends are used for the same parts. Moreover, for the purpose of clear description, some parts are omitted from the accompanying drawings.

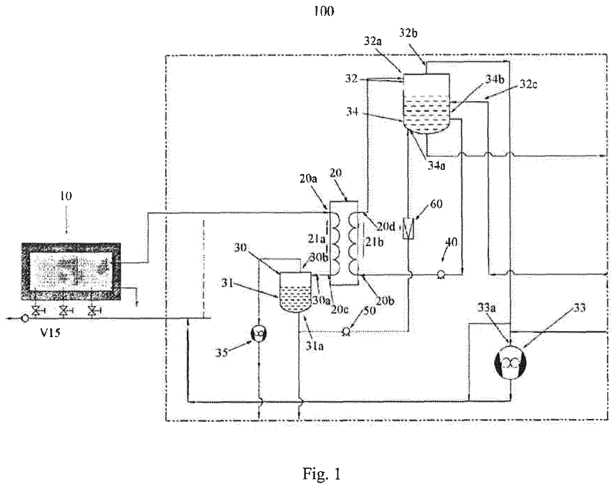

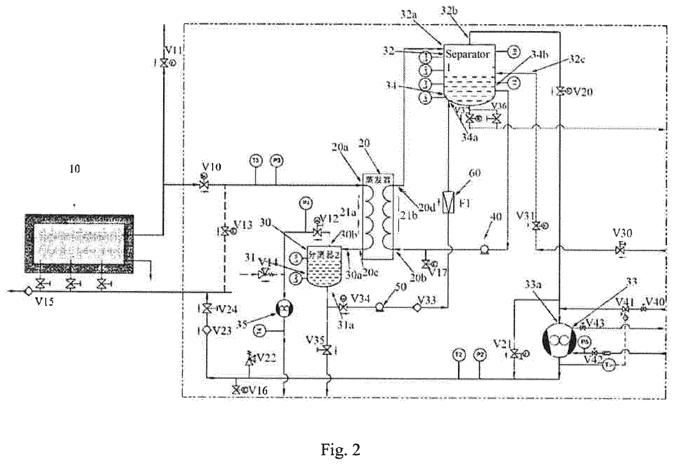

Fig. 1 illustrates an MVR system 100 according to an embodiment of the present application. Fig. 2 is a specific example of the system 100 shown in Fig. 1. As shown in Fig. 1 and Fig. 2, the system 100 comprises an evaporator 20. The evaporator 20 may be a wall-type heat exchanger, and its work principle is that a liquid at low temperature and low pressure is vaporized and absorbs heat at one side of a heat transfer wall, such that the medium at the other side of the heat transfer wall is cooled. Herein, a horizontal shell and tube evaporator and an upright tubular cold water tank in the art may be used.

The evaporator 20 according to an embodiment of the present application may comprise a high temperature fluid reception channel 21 a and a low temperature fluid reception channel 21 b. The high temperature fluid reception channel 21 a comprises a first inlet 20a and a first outlet 20c, while the low temperature fluid reception channel 21 b comprises a second inlet 20b and a second outlet 20d. Compared with a first area of the low temperature fluid reception channel 21 b immediately adjacent to the inlet 20b, the area of the low temperature fluid reception channel 21 b immediately adjacent to the outlet 20d has a volume expansion by one thousand times.

The MVR system 100 continuously receives a high temperature mixture of liquid and vaporous water generated from a vapor source 10 via the high temperature fluid channel 21 a. The evaporator 20 receives the high temperature mixture via the first inlet 20a and enables it to flow through the high temperature fluid reception channel 21 a. There is no opening between the high temperature fluid reception channel 21a and the low temperature fluid reception channel 21 b that is communication with each other, such that the fluid in the low temperature fluid reception channel 21 b performs heat exchange via the wall of the reception channels 21 a and 21 b. Specifically, when the high temperature fluid reception channel 21 a receives the mixture of liquid and vaporous water (e.g. 100 to 105°C, see Fig. 2) from the vapor source 10, heat of the high temperature mixture is release to lower the temperature through heat exchange with the fluid in the low temperature fluid reception channel 21 b. For example, the cooled mixture becomes a 90°C mixture of waste vapor and water.

As shown in Fig. 1, the system 100 further comprises a first cavity 30 and a first separator and/or condenser of a first fluid collection area 31 formed by the cavity. The first cavity 30 comprises a gap space and has an inlet 30a leading to the gap space. The inlet 30a is disposed in the fluid reception direction of the first outlet 20c of the evaporator 20 and is in fluid communication with the first outlet 20c. The first fluid collection area 31 is in fluid communication with the inlet 30a in the fluid reception direction of the inlet 30a of the first cavity 30. After the fluid in the high temperature fluid channel 20a of the evaporator 20 exchanges heat with the fluid in the low temperature fluid channel 20b, it is collected in the first fluid collection area 31 via the first outlet 20c and the inlet 30a. In the first fluid collection area 31, the mixture formed after cooling is separated, namely, vaporous water is separated from liquid water. The first cavity 30 comprises an outlet 30b, and a blower 35 is in fluid communication with the outlet 30b. The vaporous water (waste vapor) separated in the first fluid collection area 31 is extracted, for example, by the blower 35 via the outlet 30b, and discharged as waste vapor; on the other hand, the separated liquid water flows out of the outlet 31 a opened outwardly from the first fluid collection area 31.

A second separator and/or condenser receives the liquid water flowing out of the outlet 31 a from the first fluid collection area 31. As shown in Fig. 2, the second separator and/or condenser at least comprises a second cavity 32 and a second fluid collection area 34. The second cavity 32 comprises a gap space and an inlet 32a leading to the gap space. The inlet 32a of the second cavity 32 is in fluid communication with the second outlet 20d of the evaporator 20 and is at a fluid reception position of the second outlet 20d of the evaporator 20, namely, the inlet 32a of the second cavity 32 is in fluid communication with the low temperature fluid channel 20b of the evaporator 20. After a fluid (e.g. 65°C) in the low temperature fluid channel 21 b of the evaporator 10 performs heat exchange with the high temperature fluid channel 21 a to increase the temperature (e.g. 85°C), the fluid flows to the inlet 32a of the second cavity 32.

The second fluid collection area 34 comprises an inlet 34a and an outlet 34b, and the second fluid collection area 34 is in fluid communication with the inlet 32a opening to the second cavity 32. The inlet 34a of the second fluid collection area 34 is in fluid communication with the outlet 31 a of the first fluid collection area 31, and is at a fluid reception position of the outlet 31 a of the first fluid collection area 31. The liquid water collected in the first cavity 30 passes through its outlet 31 a, flows to the inlet 34a of the second fluid collection area 34 under the action of a pump 50, and is collected in the second fluid collection area 34 via the inlet 34a. In one embodiment, a filter 60 may be further disposed between the first fluid collection area 31 and the second fluid collection area 34, and the liquid water flowing out of the outlet 31 a of the first fluid collection area 31 passes through the filter 60 for removal of impurities, and is then transported to the second fluid collection area 34.

The outlet 34b of the second fluid collection area 34 is in fluid communication with the second inlet 20b of the evaporator 20, and the second inlet 20b of the evaporator 20 is at a fluid reception position relative to the outlet 34b of the second fluid collection area 34. The liquid water collected in the second fluid collection area 34 forms, under the action of a circulation pump 40, a fluid loop from the outlet 34b of the second fluid collection area 34 all the way to the inlet 32a of the second cavity 32 along with the low temperature channel 21 b of the evaporator 20. The interior of the second fluid collection area 34 that is formed inside the vacuum cavity 32 is vacuumized through suction by a blower. In one embodiment, an air pressure of, for example, 57.8 KPa(a) may be formed, such that a part of the collected liquid water flowing into the vacuum cavity 32 becomes vaporous.

As shown in the figure, the second cavity 32 further comprises an inlet 32c opening inwardly from its gap space, and water having a normal temperature (e.g. 20°C) (e.g. clean water having a normal temperature) may be added from outside into the second fluid collection area 34 via the inlet, thereby making up for the waste vapor discharged from the first fluid collection area 31. The second cavity 32 further comprises another outlet 32b, a fluid inlet 33a of a blowing type pump 33 is in fluid communication with the outlet 32b, and the fluid inlet 33a is at a fluid reception position relative to the outlet 32b of the second cavity 32.

In an operating process, the high temperature mixture of vaporous and liquid water received from the vapor source 10 is in the high temperature fluid reception channel 21 a, while a second fluid having a relatively low temperature is in the low temperature fluid reception channel 21 b. Through heat exchange, heat of the fluid in the high temperature fluid reception channel 21 a is transferred to the second fluid in the low temperature fluid reception channel 21 b. The fluid in the high temperature fluid reception channel 21 a is from the current supply of the vapor source 10, namely the high temperature fluid reception channel 21 a receives a supply of a mixture of vaporous and liquid water in real time from the vapor source 10. The fluid in the low temperature fluid reception channel 21 b at least partially comprises the fluid previously supplied by the vapor source 10. In one embodiment, the vapor source 10 is in fluid communication with a heat source of a boiler component, and the boiler component may, for example, comprise oil and noodle.

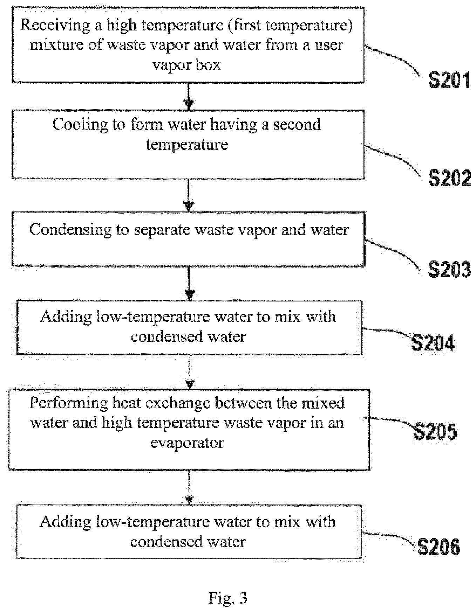

To better understand the present invention, an MVR method 200 according to one embodiment of the present application will be described with reference to Fig. 3. With the description of the MVR method 200, the mutual cooperation between the above parts in an MVR system can be better understood.

The MVR method 200 starts from the step S201, which receives a first fluid supply of a mixture of vaporous and liquid water from a vapor source 10, and transfers the first fluid supply from the vapor source 10 to a high temperature fluid channel 21 a of an evaporator 20. In the step S202, liquid water in the first fluid supply is collected through a first fluid collection area 31. For example, after a mixture of vaporous and liquid water at, for example, 100 to 105°C generated by the vapor source 10 enters the MVR system, it enters the evaporator 20 via a pneumatic ball valve V10. The mixture of vaporous and liquid water releases heat in the evaporator 20, becomes a 90°C mixture of water and waste vapor and liquid, and then enters the first fluid collection area 31. In the first fluid collection area 31, the waste vapor is separated, extracted by a blower via a pneumatic regulation valve V12, and discharged as waste vapor; the liquid water isolated separately is collected in the first fluid collection area 31.

In the step S203, enabling the collected liquid water to flow to the low temperature fluid reception channel 21 of the evaporator, for example, the collected liquid water passes through a pneumatic ball valve V34, and is pumped by a pump into the second fluid collection area 34. In one embodiment, prior to entering the second fluid collection area 34, water needs to be filtered by a filter 40. The liquid water collected in the second fluid collection area 34 then flows through the outlet 34b thereof into the low temperature fluid reception channel 21 b.

In the step S204, enabling the mixture of liquid and vaporous water subsequently supplied by the vapor source 10 to flow to the high temperature fluid reception channel 21 a of the evaporator 20, transferring heat of subsequently supplied vaporous water in the high temperature fluid reception channel 21 a to the liquid water collected in the low temperature fluid reception channel 21 b in the evaporator (20), and increasing the temperature of the collected liquid water through the heat transfer.

Subsequently in the step S205, collecting the liquid water that has gone through heat transfer in the second fluid collection area 34. The second fluid collection area 34 formed by the vacuum cavity 32 has a pressure of vacuum, and the pressure of vacuum is high enough to further make a part of the collected liquid water flowing into the vacuum cavity 32 to convert to the vaporous state, thereby transferring by the blower the water converted to the vaporous state so as to return the vaporous water to the vapor source 10.

As described above, in one embodiment of the present application, clean water at, for example, 20°C may be further added in the second fluid collection area 34 so as to make up for the waste vapor discharged in the first fluid collection area 31. Then, it is mixed with the hot water at, for example, 90°C collected in the first fluid collection area 31 to form water at, for example, 65°C. The water at 65°C is pumped through a water pump 1 via the opening 34b to the low temperature fluid reception channel 21 b of the evaporator 20, and after heat exchange with a high temperature mixture of liquid and vaporous water at, for example, 100 to 105°C received by the high temperature channel 21 a of the evaporator 20 from the vapor source 10, forms water or vapor at, for example, 85°C. If the water temperature does not reach 85°C, the water pump 1 (variable frequency) increases the water pumping frequency to increase the quantity of heat transfer with the fluid in the high temperature channel and raise the water temperature to, for example, 85°C. The interior of the second fluid collection area 34 is vacuumized through suction by a blower. In one embodiment, an air pressure of, for example, 57.8 KPa(a) may be formed, such that the 85°C steam becomes a vapor, which, after a pneumatic ball valve V20, is further compressed by the blower to, for example, 120 to 140 KPa(a), and at this moment, the vapor temperature is increased to, for example, 105 to 110°C. After passing through a check valve V23 and a manual stop valve V24, it is supplied to the vapor source 10.

In this embodiment, in order not to affect a user's normal production, the user needs to add a check valve V15 at the inlet of the vapor source 10, and a pneumatic ball valve V11 at the waste vapor outlet. The pneumatic ball valve V11 is interlinked with the pneumatic ball valve V10: when the MVR system 100 works normally, V10 is opened, and at the same time, V11 is closed; when the MVR system 100 is shut down normally or is shut down due to a fault, V11 is opened, and at the same time, V10 is closed. When the vapor supply pressure of the MVR system 100 does not meet a predetermined value (for example, 120 KPa(a)), the check valve V15 is opened, and the original vapor system replenishes vapor to the vapor box 10; when the vapor pressure generated by the MVR system 100 reaches a predetermined value (120 KPa(a)), the check valve V15 is closed, and in such a way, the user's normal production will not be affected.

The MVR system and method according to the embodiment of the present application are described above. However, it should be understood that the description above is just an example to implement the present invention, and is not used to limit the present invention. Any modification, equivalent substitution and improvement made within the spirit and principle of the present invention shall be encompassed by the present invention.

## Claims

1. A mechanical vapor recompression system, comprising:
an evaporator (20), comprising a first inlet (20a), a second inlet (20b), a first outlet (20c) and a second outlet (20d), the first inlet (20a) and the first outlet (20c) forming opposing ends of a high temperature fluid reception channel (21 a), the second inlet (20b) and the second outlet (20d) forming opposing ends of a low temperature fluid reception channel (21 b), and no opening communicating the high temperature fluid reception channel (21 a) and the low temperature fluid reception channel (21 b) existing between the two;
a first cavity (30), comprising a gap space and having an inlet (30a) leading to the gap space, and the inlet (30a) being in fluid communication with the first outlet (20c) in the fluid reception direction of the first outlet (20c) of the evaporator (20);
a first fluid collection area (31) in fluid communication with the inlet (30a) in the fluid reception direction of the inlet (30a) of the first cavity (30), the first fluid collection area (31) comprising an outlet (31 a) opened from the first fluid collection area (31), the outlet (31 a) opened from the first fluid collection area (31) being in fluid communication with the second inlet (20b) of the evaporator (20), and the second inlet (20b) of the evaporator (20) being at a fluid reception position relative to the outlet (31a) of the first fluid collection area (31);
a second cavity (32), comprising a gap space and an inlet (32a) leading to the gap space, the inlet (32a) of the second cavity (32) being in fluid communication with the second outlet (20d) of the evaporator (20) and at a fluid reception position of the second outlet (20d) of the evaporator (20), and the second cavity (32) comprising an outlet (32b) opened outwardly from the gap space thereof;
a blowing type pump (33), comprising a fluid inlet (33a) in fluid communication with the outlet (32b) of the second cavity (32), the fluid inlet (33a) being at a fluid reception position relative to the outlet (32b) of the second cavity (32), and
wherein, in the operating state of the system:
a first fluid having a first temperature is in the high temperature fluid reception channel (21 a), and the first fluid is received to a vapor source (10) and comprises a mixture of vaporous and liquid water;
a second fluid having a second temperature is in the low temperature fluid reception channel (21 b), and the second fluid comprises a mixture of vaporous and liquid water;
heat of the first fluid in the high temperature fluid reception channel (21a) is transferred to the second fluid in the low temperature fluid reception channel (21 b); and
the first fluid in the high temperature fluid reception channel (21 a) is from the current supply of the vapor source (10), the vapor source (10) is in fluid communication with the first inlet (20a) of the evaporator (20), and the second fluid in the low temperature fluid reception channel (21 b) at least partially comprises the fluid previously supplied by the vapor source (10); the second fluid in the low temperature fluid reception channel (21 b) has been at least partially collected from the first fluid collection area (31).

2. The system according to claim 1, further comprising:
a second fluid collection area (34), an inlet (34a) opening to the second fluid collection area (34), an outlet (34b) opening outwardly from the second fluid collection area (34), the second fluid collection area (34) being in fluid communication with the inlet (32a) opening to the second fluid collection area (34), the inlet (34a) of the second fluid collection area (34) being in fluid communication with the outlet (31 a) of the first fluid collection area (31), and at a fluid reception position of the outlet (31 a) of the first fluid collection area (31), the outlet (34b) of the second fluid collection area (34) being in fluid communication with the second inlet (20b) of the evaporator (20), and the second inlet (20b) of the evaporator (20) being at a fluid reception position relative to the outlet (34b) of the second fluid collection area (34).

3. The system according to claim 2, wherein the first cavity (30) and the first fluid collection area (31) form at least a part of a separator and/or a condenser.

4. The system according to claim 2, wherein the second cavity (32) and the second fluid collection area (34) form at least a part of an evaporator and/or a separator.

5. The system according to claim 2, wherein the vapor source (10) is in fluid communication with a heat source of a boiler component.

6. The system according to claim 2, wherein, compared with the area of the low temperature fluid reception channel (21 b) immediately adjacent to the inlet (20b) of the evaporator (20), the area of the low temperature fluid reception channel (21 b) immediately adjacent to the outlet (20d) of the evaporator (20) has a volume expansion by one thousand times.

7. The system according to claim 2, further comprising a filter (60) disposed between the first fluid collection area (31) and the second fluid collection area (34), the liquid water flowing out of the outlet (31 a) of the first fluid collection area (31) passing through the filter (60) for removal of impurities, and then transported to the second fluid collection area (34).

8. The system according to claim 1, wherein the first cavity (30) comprises an outlet (30b) opened outwardly from the gap space thereof, the outlet (30b) is in fluid communication with a blower (35), and the vaporous water separated from the first fluid in the first fluid collection area (31) is extracted under the action of the blower (35) via the outlet (30b) of the first cavity (30) and discharged as waste vapor.

9. The system according to claim 8, wherein the second cavity (32) further comprises an inlet (32c), and liquid water is added via the inlet (32c) into the second fluid collection area (34), thereby making up for the waste vapor discharged by the system from the first fluid collection area (31).

10. A mechanical vapor recovery method, comprising:
supplying a first fluid to flow from a vapor source (10) to a high temperature fluid reception channel (21 a) of an evaporator (20), the first fluid supply comprising a mixture of vaporous and liquid water;
collecting liquid water in the first fluid supply;
enabling the collected liquid water to flow to a low temperature fluid reception channel (21 b) of the evaporator;
enabling the vaporous water subsequently supplied by the vapor source (10) to flow to the high temperature fluid reception channel (21 a) of the evaporator (20);
transferring heat of subsequently supplied vaporous water in the high temperature fluid reception channel (21a) of the evaporator (20) to the liquid water collected in the low temperature fluid reception channel (21 b) of the evaporator (20);
increasing the temperature of the collected liquid water through the heat transfer;
converting at least a part of the liquid water collected in the low temperature fluid reception channel (21 b) to vaporous water;
further heating the water converted to the vaporous state;
and returning the further heated vaporous water to the vapor source (10).

11. The method according to claim 10, further comprising:
enabling the vaporous water converted in the low temperature fluid reception channel (21 b) and the liquid water collected from the low temperature fluid reception channel (21 b) to flow to the vacuum cavity (32), the pressure of vacuum of the vacuum cavity (32) being high enough to further make a part of the collected liquid water flowing into the vacuum cavity (32) to convert to the vaporous state.

12. The method according to claim 11, wherein the step of further heating comprises: transferring by the blower the water converted to the vaporous state.

13. The method according to claim 11, wherein the step of collecting liquid water in the first fluid supply comprises:
separating the liquid water from the vaporous water in the first fluid supply in the first fluid collection area (31);
collecting the separated liquid water in the first fluid collection area (31); and
discharging the separated vaporous water as waste vapor from the first fluid collection area (31).

14. The method according to claim 13, further comprising:
adding liquid water into the vacuum cavity (32) so as to make up for the liquid water discharged from the first fluid collection area (31).
